# EUROPEAN PATENT APPLICATION

(11) **EP 3 620 351 A1**
(43) Date of publication of application: **11.03.2020**
(21) Application number: 18194980.1
(22) Date of filing: 18.09.2018
(51) Int. Cl.: B62D 5/04, F16C 27/06, F16F 1/38

(54) **DAMPING BUSHING FOR STEERING GEAR OF VEHICLE**

(30) Priority: 07.09.2018 KR 20180107127
(71) Applicant: DMC, Inc., Seongnam-si, Gyeonggi-do 13493 (KR)
(72) Inventor: KIM, Hyung Jin, Yeongcheon-si, Gyeongsangbuk-do (KR); JANG, Byung Gu, Yeongcheon-si, Gyeongsangbuk-do (KR); JUNG, Jung Un, Gyeongsan-si, Gyeongsangbuk-do (KR); KIM, Hyung Joon, Seoul (KR); PARK, Jong Hyun, Yeongcheon-si, Gyeongsangbuk-do (KR); LEE, Won Wook, Yeongcheon-si, Gyeongsangbuk-do (KR)
(74) Representative: Zardi, Marco

(57) **Abstract**

The present invention relates to a damping bushing for a steering gear of a vehicle that is capable of lowering tilting stiffness, improving axial stiffness, and achieving vibration reduction and impact absorption. According to the present invention, the damping bushing (10) includes: a circular outer case (100) located on an outermost side thereof; an inner case (200) located inside the outer case (100); a damping member (300) located between the outer case (100) and the inner case (200) to absorb vibrations and impacts; and a bearing (400) coupled to the inner peripheral surface of the inner case (200).

## Description

### [Technical Field]

The present invention relates to a damping bushing for a steering gear of a vehicle, and more particularly, to a damping bushing for a steering gear of a vehicle that is capable of lowering tilting stiffness, improving axial stiffness, and achieving high vibration reduction and impact absorption.

### [Background Art]

Electric power steering devices, which assist a steering force of a vehicle with a driving force generated from a motor, have been known.

Also, a power steering device among the electric power steering devices, which transfers the driving force of the motor to a steering shaft to assist the steering force, has been introduced.

The electric power steering device serves to drive the motor according to driving conditions of the vehicle like sensing results of a vehicle speed sensor and a steering torque sensor, thereby assisting the steering force and improving steering feel.

The electric power steering device has a shaft worm gear connected to an output shaft of the motor and a worm wheel disposed on a steering shaft in such a manner as to engage with the shaft worm gear, so that the driving force of the motor is transferred to the steering shaft.

According to the conventional electric power steering device, however, a gap may be formed due to abrasion of the gear, backlash may be increased due to manufacturing tolerances, vibrations or noise may be generated due to the gap and the backlash, and impacts generated from wheels may be applied to the electric power steering device.

### [Prior art document]

### [Patent Document]

Korean Patent Application Laid-open No. 10-2018-0001353
Korean Patent Registration No. 10-1761813
Korean Patent Application Laid-open No. 10-2016-0005030
Korean Patent Registration No. 10-1650743

### [Disclosure]

### [Technical Problem]

Accordingly, the present invention has been made in view of the above-mentioned problems occurring in the prior art, and it is an object of the present invention to provide a damping bushing for a steering gear of a vehicle that is configured to admit a tilting mode of a worm shaft and to improve a coupling force between parts thereof, thereby achieving slip prevention, improvement in a fixing force to a bearing, swing prevention of the bearing, simplification in an injection molding process thereof, and damage prevention of the bearing.

An object of the present invention is not limited by the above-mentioned object, and other objects not mentioned above will be clearly understood by those having ordinary skill in the art from the following detailed description.

### [Technical Solution]

To accomplish the above-mentioned object, according to the present invention, there is provided damping bushing for a steering gear of a vehicle, including: a circular outer case located on an outermost side thereof; an inner case located inside the outer case; a damping member located between the outer case and the inner case to absorb vibrations and impacts; and a bearing coupled to the inner peripheral surface of the inner case.

According to the present invention, desirably, when the inner case is viewed on the front side thereof, the inner case includes first and second thickness increment portions formed on both sides thereof with respect to a vertical center shaft in such a manner as to have given widths in upward and downward directions and to be extended radially outward in a circumferential direction thereof.

According to the present invention, desirably, the inner case includes connection portions adapted to connect the outer peripheral surfaces of the first and second thickness increment portions with the outer peripheral surface of the inner case, the connection portions being rounded, and a thickness t2 between the outer peripheral surface of each of the first and second thickness increment portions and the inner peripheral surface of the inner case is larger by 1.4 to 1.8 times than a thickness t1 between the inner peripheral surface and the outer peripheral surface of the inner case (t2 = 1.4 to 1.8 t1).

According to the present invention, desirably, the inner case includes slip prevention coupling holes formed on the outer surfaces of the first and second thickness increment portions on the same center axis as each other in such a manner as to be penetrated radially into the inner peripheral surface of the inner case.

According to the present invention, desirably, diameters D1 of the outer end peripheries of the slip prevention coupling holes formed on the outer surfaces of the first and second thickness increment portions are larger than diameters D2 of the inner end peripheries of the slip prevention coupling holes formed on the inner peripheral surface of the inner case (D1 > D2).

According to the present invention, desirably, when the inner case is viewed on the side thereof, the inner case includes first and second length increment portions formed on front and back surfaces thereof, respectively, in such a manner as to be extended axially from the given widths to increase stiffness to the axial direction thereof.

According to the present invention, desirably, the first and second length increment portions are symmetrically formed up and down in such a manner as to be gently curved toward an axial center axis, and protrude outward from the front and back surfaces of the outer case.

According to the present invention, desirably, when the outer case is viewed on the front side thereof, the outer case includes slip support portions protruding radially inward from the inner peripheral surfaces of both sides thereof with respect to the vertical center shaft in such a manner as to be inserted into the slip prevention coupling holes of the inner case.

According to the present invention, desirably, when the damping member is viewed on the front side thereof, the damping member includes seating portions concaved inward from the inner peripheral surfaces of both sides thereof with respect to the vertical center shaft in such a manner as to correspond to shapes of the first and second thickness increment portions.

According to the present invention, desirably, the damping member includes first damping reinforcement portions protruding radially inward from the inner peripheral surfaces of the seating portions in such a manner as to be located between outer peripheral surfaces of the slip support portions and inner peripheral walls of the slip prevention coupling holes and second damping reinforcement portions extended from the end peripheries of the first damping reinforcement portions in such a manner as to be located between outer peripheral walls of the end peripheries of the slip support portions and the outer peripheral surface of the bearing.

According to the present invention, desirably, the damping member includes first and second elastic reinforcement portions formed on an upper peripheral surface and a lower peripheral surface, on which the seating portions are not formed, in such a manner as to be extended long in the circumferential direction thereof to pass through the front and back surfaces of the upper peripheral surface and the lower peripheral surface and to thus reduce the vibrations and impacts.

According to the present invention, desirably, the inner case includes a seating groove formed on the inner peripheral surface thereof in the circumferential direction thereof in such a manner as to fittingly couple an outer race of the bearing thereto, so that front and rear surfaces of the bearing do not protrude outward to prevent the bearing from being damaged and broken.

According to the present invention, desirably, the outer case and the inner case are made of a hard thermoplastic material, and the damping member is made of a soft thermoplastic material.

According to the present invention, desirably, the outer case and the inner case are made of poly butylene terephthalate (PBT) or polyamide (PA), and the damping member is made of thermoplastic polyester elastomer (TPEE) or thermoplastic poly urethane (TPU).

According to the present invention, desirably, the materials of the outer case, the inner case, and the damping member are predetermined with the following Case 1 and Case 2.
Case 1: poly butylene terephthalate (PBT) + thermoplastic polyester elastomer (TPEE), and
Case 2: polyamide (PA) + thermoplastic poly urethane (TPU).

Objects, characteristics and advantages of the present invention will be more clearly understood from the detailed description as will be explained below and the attached drawings.

All terms used in the description and the claims, unless otherwise defined, have the same meanings which are typically understood by those having ordinary skill in the art. The terms, such as ones defined in common dictionaries, should be interpreted as having the same meanings as terms in the context of pertinent technology, and should not be interpreted as having ideal or excessively formal meanings unless clearly defined in the specification.

### [Advantageous Effects]

According to the present invention, the damping bushing for a steering gear of a vehicle is configured to improve the coupling force between the parts thereof to achieve improvement in the fixing force to the bearing, thereby preventing the bearing from swinging to provide excellent vibration damping capability, and configured to minimize the injection molding process thereof to prevent the bearing from being damaged, thereby providing high vibration reduction and impact absorption.

### [Brief Description of Drawings]

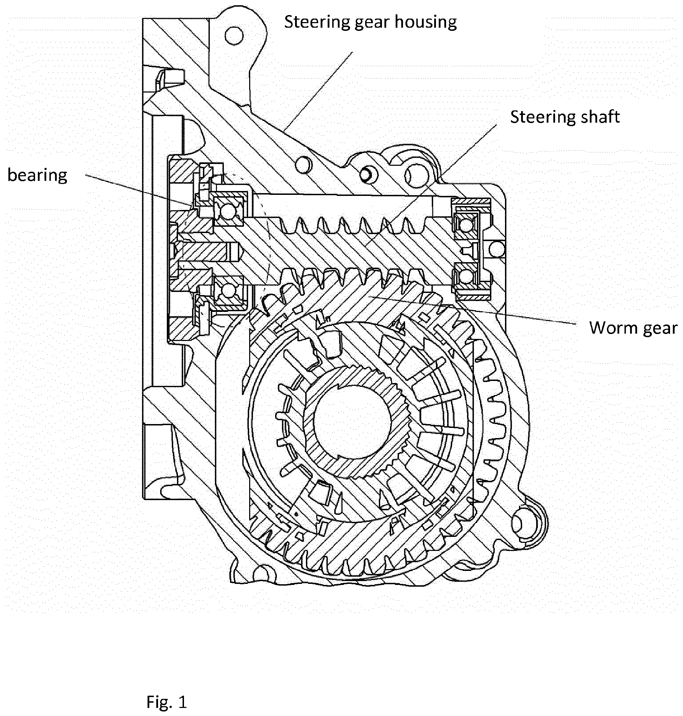

FIG.1 is a longitudinal sectional view showing a general steering gear.
FIG.2 is a perspective view showing a coupled state of a damping bush according to the present invention with a shaft.
FIG.3 is a front view showing the damping bush according to the present invention.
FIG.4 is a side view showing the damping bush according to the present invention.
FIG.5 is a sectional view showing a portion 'A-A' of FIG.3.
FIG.6 is a sectional view showing a portion 'B-B' of FIG.3.
FIG.7 is an exploded perspective view showing the damping bush according to the present invention.
FIGS.8a and 8b are front and side views showing an inner case of the damping bush according to the present invention.
FIG.9 is a front view showing a damping member of the damping bush according to the present invention.
FIG.10 is a front view showing an outer case of the damping bush according to the present invention.
FIG.11 is an enlarged view showing a portion 'A' of FIG.6.
FIG.12 is a partial sectional view showing a bearing of the damping bush according to the present invention.

### [Mode for Invention]

Hereinafter, an explanation on a damping bushing for a steering gear of a vehicle according to the present invention will be in detail given with reference to the attached drawing. In the description, the thicknesses of the lines or the sizes of the components shown in the drawing may be magnified for the clarity and convenience of the description.

Further, the terms as will be discussed later are defined in accordance with the functions of the present invention, but may be varied under the intention or regulation of a user or operator. Therefore, they should be defined on the basis of the whole scope of the present invention.

The present invention may be modified in various ways and may have several exemplary embodiments. Specific exemplary embodiments of the present invention are illustrated in the drawings and described in detail in the detailed description. However, this does not limit the invention within specific embodiments and it should be understood that the invention covers all the modifications, equivalents, and replacements within the idea and technical scope of the invention.

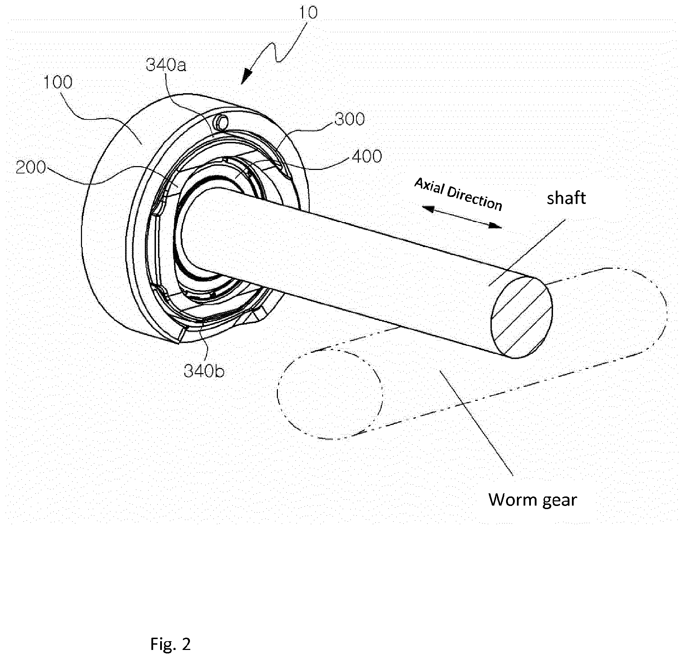

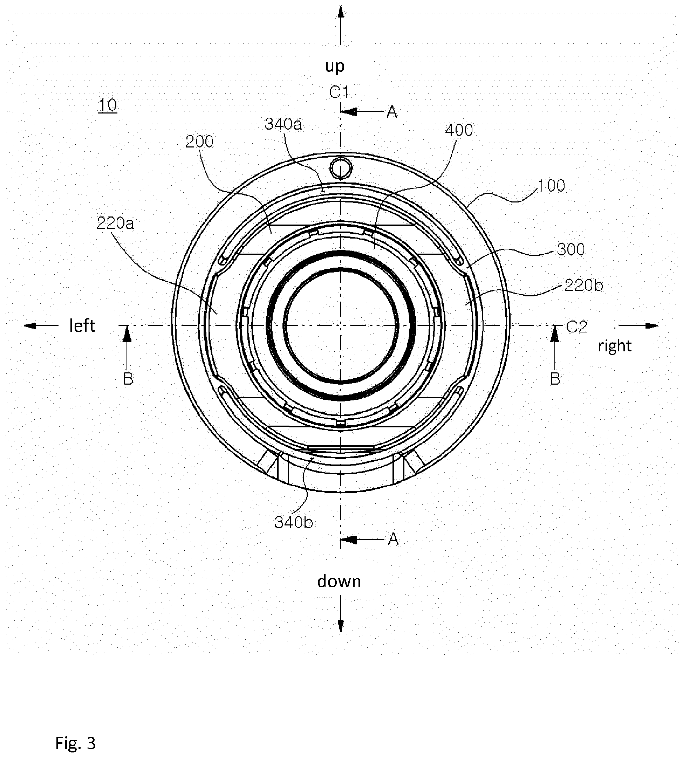

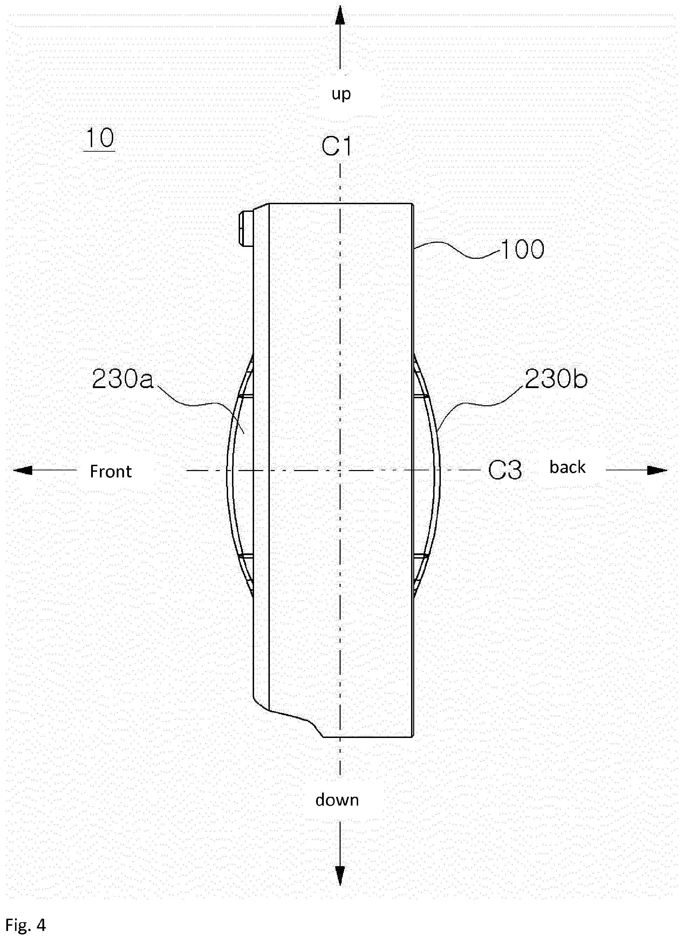

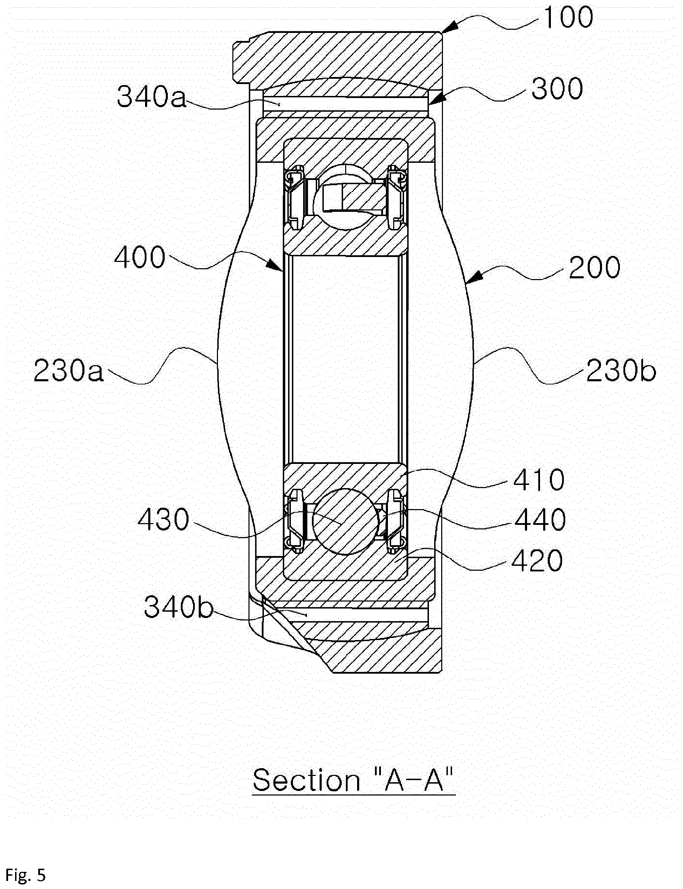

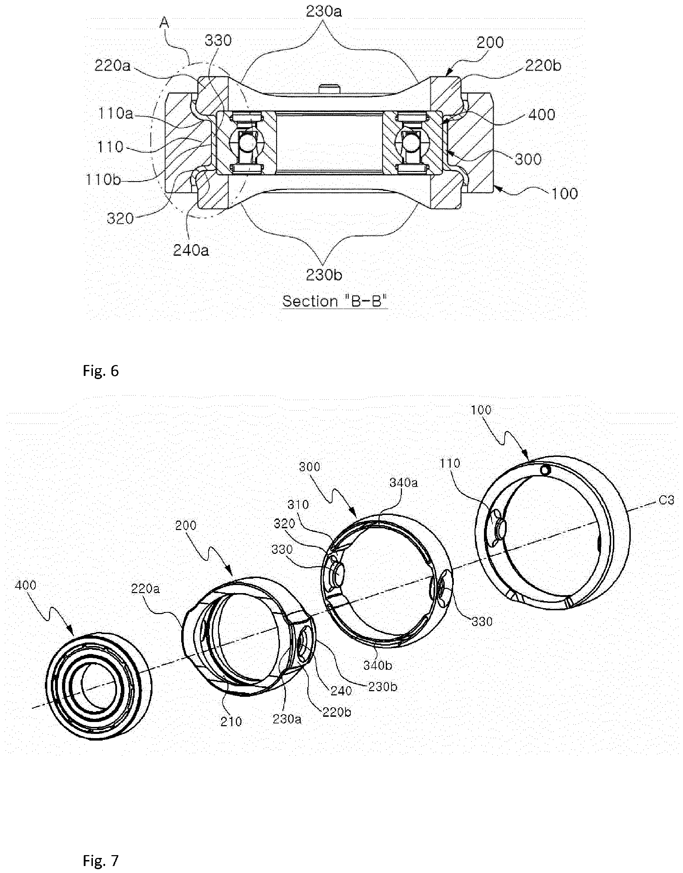

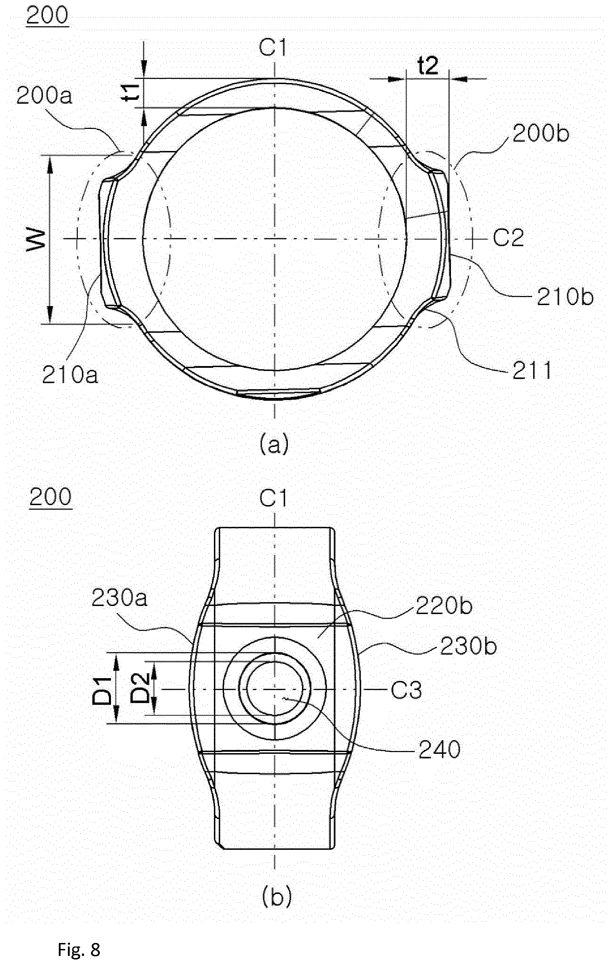

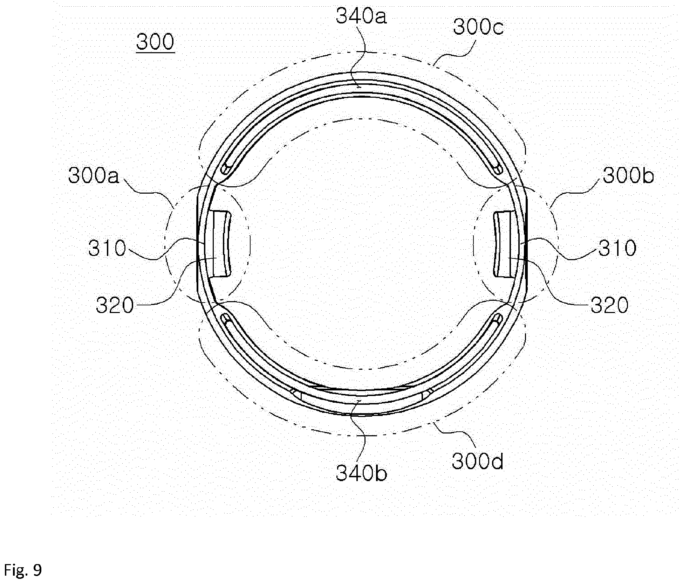

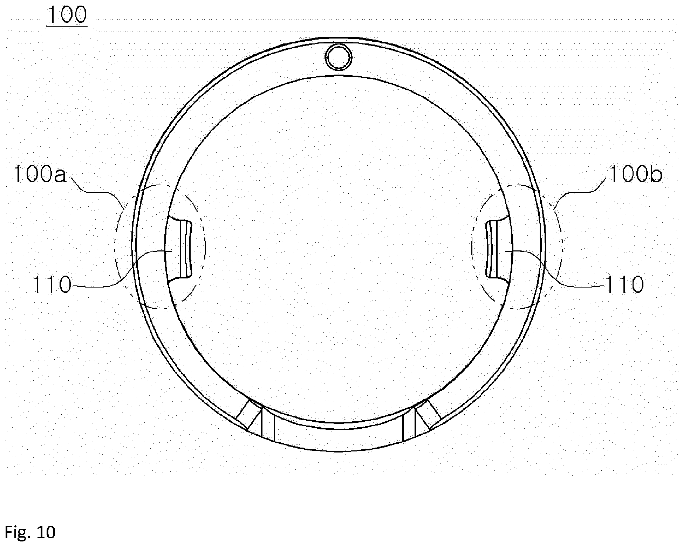

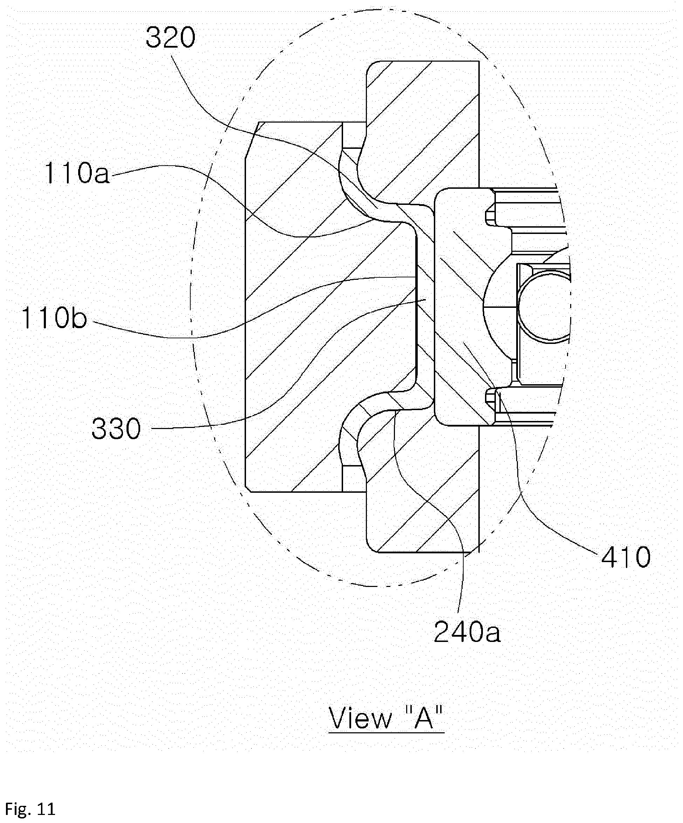

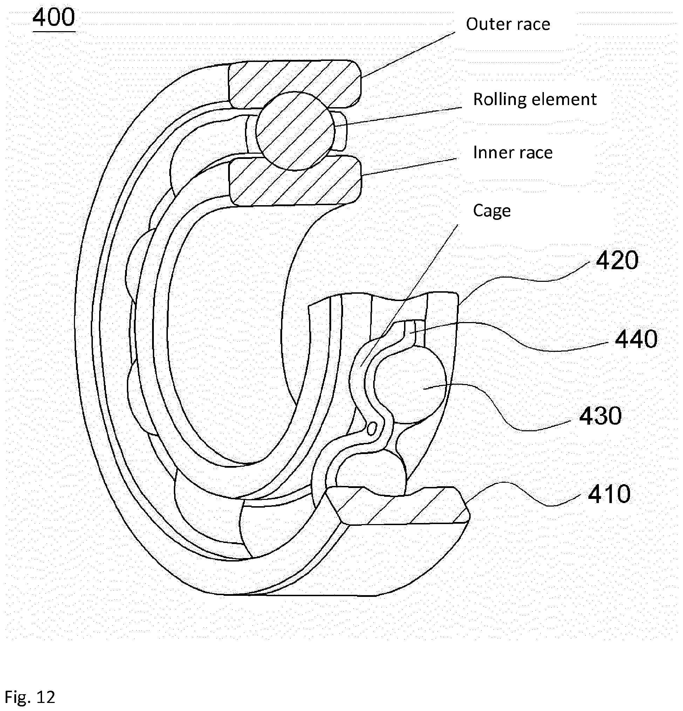

FIG.2 is a perspective view showing a coupled state of a damping bush according to the present invention with a shaft, FIG.3 is a front view showing the damping bush according to the present invention, FIG.4 is a side view showing the damping bush according to the present invention, FIG.5 is a sectional view showing a portion 'A-A' of FIG.3, FIG.6 is a sectional view showing a portion 'B-B' of FIG.3, FIG.7 is an exploded perspective view showing the damping bush according to the present invention, FIGS.8a and 8b are front and side views showing an inner case of the damping bush according to the present invention, FIG.9 is a front view showing a damping member of the damping bush according to the present invention, FIG.10 is a front view showing an outer case of the damping bush according to the present invention, FIG.11 is an enlarged view showing a portion 'A' of FIG.6, and FIG.12 is a partial sectional view showing a bearing of the damping bush according to the present invention.

As shown in FIGS.2 to 12, a damping bushing 10 for a steering gear of a vehicle according to the present invention includes a circular outer case 100 located on an outermost side thereof, an inner case 200 located inside the outer case 100, a damping member 300 located between the outer case 100 and the inner case 200 to absorb vibrations and impacts, and a bearing 400 coupled to the inner peripheral surface of the inner case 200.

At this time, the outer case 100, the damping member 300 and the inner case 200 are located on the same axis as an axial center axis C3 axially passing through the center of the bearing 400.

Further, the outer case 100 and the inner case 200 are made of a hard thermoplastic material, and the damping member 300 is made of a soft thermoplastic material.

In detail, the outer case 100 and the inner case 200 are made of any one of steel and plastic to fix the bearing 400 thereto.

In more detail, the outer case 100 and the inner case 200 are made of poly butylene terephthalate (PBT) or polyamide (PA), and the damping member is made of thermoplastic polyester elastomer (TPEE) or thermoplastic poly urethane (TPU).

Also, the materials of the outer case 100, the inner case 200, and the damping member 300 are predetermined with the following Case 1 and Case 2.
Case 1: poly butylene terephthalate (PBT) + thermoplastic polyester elastomer (TPEE), and
Case 2: polyamide (PA) + thermoplastic poly urethane (TPU)

On the other hand, the bearing 400 includes a disc-shaped outer race 410, a disc-shaped inner race 420, rolling elements 430 inserted between the outer race 410 and the inner race 420, and a bearing cage 440 for fastening the rolling elements 430 spaced apart from each other thereto.

At this time, the bearing cage 440 is shaped to surround the rolling elements 430 to prevent the rolling elements 430 from escaping therefrom.

In conventional practices, the bearing cage 440 is made of steel, and if a rotating speed of the bearing 400 is increased, the center of the bearing 400 is collected to a circumferential direction, so that the bearing 400 swings to cause vibrations.

If a rotating direction of the bearing 400 is converted in the opposite direction, accordingly, backlash is generated between the rolling elements 430 and the bearing cage 440, so that the rolling elements 430 and the bearing cage 440 collide against each other, thereby undesirably causing noise.

So as to solve such problems, accordingly, the bearing cage 440 according to the present invention is made of plastic.

In detail, the bearing cage 440 is made of plastic, and it is lighter than the conventional bearing cage made of steel, so that the swing of the bearing 400 can be suppressed to reduce vibrations caused therefrom, and also, noise generated by the collision of the bearing cage 440 with the rolling elements 430 can be reduced.

Accordingly, the bearing cage 440 is made of such plastic, and the bearing 400 is lighter than the conventional bearing made of steel, so that the swing of the bearing 400 can be suppressed to reduce the vibrations caused therefrom, and also, the noise generated by the collision of the bearing cage 440 with the rolling elements 430 can be reduced.

On the other hand, the damping member 300 of the damping bush 10 according to the present invention is made with a first mold prefabricated to the shape of the damping member 300 by means of first injection molding, and next, the primarily molded damping member 300 and the bearing 400 are inserted into a second mold prefabricated to the shapes of the outer case 100 and the inner case 200 to at the same time make the outer case 100 and the inner case 200 by means of second injection molding.

Accordingly, the bearing 400 is coupled to the inner case 200 made of the hard material, thereby improving the fixing force thereto, and the injection molding process of the bearing 400 is minimized to prevent the damage of the bearing 400, so that the damping bush 10 can achieve high vibration reduction and impact absorption.

On the other hand, the inner case 200 has a seating groove 210 formed on the inner peripheral surface thereof in the circumferential direction thereof in such a manner as to fittingly couple the outer race 410 of the bearing 400 thereto, so that front and rear surfaces of the bearing 400 do not protrude outward from the inner case 200, thereby preventing the damage and breakage of the bearing 400.

Further, when the inner case 200 is viewed on the front side thereof, it has first and second thickness increment portions 220a and 220b formed on both sides 200a and 200b with respect to a vertical center shaft C1 in such a manner as to have given widths W in upward and downward directions and to be extended radially outward in the circumferential direction.

At this time, connection portions 221 are formed to connect the outer peripheral surfaces of the first and second thickness increment portions 220a and 220b with the outer peripheral surface of the inner case 200, and the connection portions 221 are rounded.

A thickness t2 between the outer peripheral surface of each of the first and second thickness increment portions 220a and 220b and the inner peripheral surface of the inner case 200 is larger by 1.4 to 1.8 times than a thickness t1 between the inner peripheral surface and the outer peripheral surface of the inner case 200 (t2 = 1.4 to 1.8 t1).

In detail, both sides 200a and 200b of the inner case 200 have the given widths W and are extended radially outward to increase the thicknesses thereof, thereby improving the stiffness in the radial direction.

Furthermore, when the inner case 200 is viewed on the side thereof, it has first and second length increment portions 230a and 230b formed on front and back surfaces thereof, respectively, in such a manner as to be extended axially from the given widths W, thereby improving the stiffness in the axial direction.

In detail, the first and second length increment portions 230a and 230b are symmetrically formed up and down in such a manner as to be gently curved toward the axial center axis C3.

Further, the first and second length increment portions 230a and 230b desirably protrude outward from the front and back surfaces of the outer case 100.

In more detail, the first and second thickness increment portions 220a and 220b are extended radially outward from both sides 200a and 200b of the inner case 200, and also, the first and second length increment portions 230a and 230b are formed unitarily with the first and second thickness increment portions 220a and 220b on the front and back surfaces of the inner case 200 in such a manner as to be extended axially.

Accordingly, the thicknesses and lengths of the given widths W of both sides 200a and 200b of the inner case 200 are increased by means of the first and second thickness increment portions 220a and 220b and the first and second length increment portions 230a and 230b, so that the stiffness in the radial and axial directions is kept to stably support the steering shaft.

Further, the first and second thickness increment portions 220a and 220b have slip prevention coupling holes 240 formed on the outer surfaces thereof on the same center axis as each other in such a manner as to be penetrated radially into the inner peripheral surface of the inner case 200.

At this time, diameters D1 of the outer end peripheries of the slip prevention coupling holes 240 formed on the outer surfaces of the first and second thickness increment portions 220a and 220b are larger than diameters D2 of the inner end peripheries of the slip prevention coupling holes 240 formed on the inner peripheral surface of the inner case 200 (D1 > D2).

In detail, desirably, the center axes of the slip prevention coupling holes 240 are the same as each other on both sides 200a and 200b of the inner case 200, and they are coaxial with a horizontal center axis C2.

Also, inner peripheral walls 240a of the slip prevention coupling holes 240 are desirably gently curved, and of course, they may be linearly formed.

On the other hand, when the outer case 100 is viewed on the front side thereof, it has slip support portions 110 protruding radially inward from the inner peripheral surfaces of both sides 100a and 100b thereof with respect to the vertical center shaft C1 in such a manner as to be inserted into the slip prevention coupling holes 240 of the inner case 200.

Accordingly, the slip support portions 110, which are inserted correspondingly into the slip prevention coupling holes 240, are formed on the inner peripheral surface of the outer case 100, so that the coupling force between the outer case 100 and the inner case 200 can be improved and the slip therebetween can be prevented.

Further, when the damping member 300 is viewed on the front side thereof, it has seating portions 310 concaved inward from the inner peripheral surfaces of both sides 300a and 300b thereof with respect to the vertical center shaft C1 in such a manner as to correspond to the first and second thickness increment portions 220a and 220b.

Moreover, the damping member 300 has first damping reinforcement portions 320 protruding radially inward from the inner peripheral surfaces of the seating portions 310 in such a manner as to be located between outer peripheral surfaces 110a of the slip support portions 110 and the inner peripheral walls 240a of the slip prevention coupling holes 240.

Accordingly, spaces between the slip support portions 110 and the slip prevention coupling holes 240 are protected by means of the first damping reinforcement portions 320, and at the same time, impacts and vibrations generated therebetween can be absorbed by means of the first damping reinforcement portions 320.

Also, second damping reinforcement portions 330 are extended from the end peripheries of the first damping reinforcement portions 320 in such a manner as to be located between outer peripheral walls 110b of the end peripheries of the slip support portions 110 and the outer peripheral surface of the bearing 400.

Accordingly, the outer race 410 of the bearing 400 comes into contact with the second damping reinforcement portions 330, thereby preventing the slip support portions 110 and the bearing 400 from being brought into contact with each other, and the impacts and vibrations applied to the bearing 400 can be directly absorbed by means of the second damping reinforcement portions 330, thereby improving impact and vibration absorbing efficiencies.

Furthermore, the damping member 300 has first and second elastic reinforcement portions 340a and 340b formed on an upper peripheral surface 300c and a lower peripheral surface 300d, on which the seating portions 310 are not formed, in such a manner as to be extended long in the circumferential direction to pass through the front and back surfaces of the upper peripheral surface 300c and the lower peripheral surface 300d, thereby reducing impacts and vibrations.

In detail, the damping member 300 has the seating portions 310 and the first and second damping reinforcement portions 320 and 330 formed on both sides 300a and 300b thereof and further has the first and second elastic reinforcement portions 340a and 340b formed on the upper peripheral surface 300c and the lower peripheral surface 300d, from which both sides 300a and 300b are removed, in such a manner as to have the shapes of through holes penetrated long into the front and back surfaces of the upper peripheral surface 300c and the lower peripheral surface 300d in the circumferential direction, thereby reducing impacts and vibrations.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

Therefore, persons skilled in the relevant art can appreciate that many modifications and variations are possible in light of the above teachings. It is therefore intended that the scope of the invention be limited not by this detailed description, but rather by the claims appended hereto.

## Claims

1. A damping bushing (10) for a steering gear of a vehicle, comprising:
a circular outer case (100) located on an outermost side thereof;
an inner case (200) located inside the outer case (100);
a damping member (300) located between the outer case (100) and the inner case (200) to absorb vibrations and impacts; and
a bearing (400) coupled to the inner peripheral surface of the inner case (200).

2. The damping bushing according to claim 1, wherein when the inner case (200) is viewed on the front side thereof, the inner case (200) comprises first and second thickness increment portions (220a and 220b) formed on both sides (200a and 200b) thereof with respect to a vertical center shaft (C1) in such a manner as to have given widths (W) in upward and downward directions and to be extended radially outward in a circumferential direction thereof.

3. The damping bushing according to claim 2, wherein the inner case (200) comprises connection portions (221) adapted to connect the outer peripheral surfaces of the first and second thickness increment portions (220a and 220b) with the outer peripheral surface of the inner case (200), the connection portions (221) being rounded, and a thickness (t2) between the outer peripheral surface of each of the first and second thickness increment portions (220a and 220b) and the inner peripheral surface of the inner case (200) is larger by 1.4 to 1.8 times than a thickness (t1) between the inner peripheral surface and the outer peripheral surface of the inner case (200) (t2 = 1.4 to 1.8 t1).

4. The damping bushing according to claim 2, wherein the inner case (200) comprises slip prevention coupling holes (240) formed on the outer surfaces of the first and second thickness increment portions (220a and 220b) on the same center axis as each other in such a manner as to be penetrated radially into the inner peripheral surface of the inner case (200).

5. The damping bushing according to claim 4, wherein diameters (D1) of the outer end peripheries of the slip prevention coupling holes (240) formed on the outer surfaces of the first and second thickness increment portions (220a and 220b) are larger than diameters (D2) of the inner end peripheries of the slip prevention coupling holes (240) formed on the inner peripheral surface of the inner case (200) (D1 > D2).

6. The damping bushing according to claim 2, wherein when the inner case (200) is viewed on the side thereof, the inner case (200) comprises first and second length increment portions (230a and 230b) formed on front and back surfaces thereof, respectively, in such a manner as to be extended axially from the given widths (W) to increase stiffness to the axial direction thereof.

7. The damping bushing according to claim 6, wherein the first and second length increment portions (230a and 230b) are symmetrically formed up and down in such a manner as to be gently curved toward an axial center axis (C3), and protrude outward from the front and back surfaces of the outer case (100).

8. The damping bushing according to claim 5, wherein when the outer case (100) is viewed on the front side thereof, the outer case (100) comprises slip support portions (110) protruding radially inward from the inner peripheral surfaces of both sides (100a and 100b) thereof with respect to the vertical center shaft (C1) in such a manner as to be inserted into the slip prevention coupling holes (240) of the inner case (200).

9. The damping bushing according to claim 8, wherein when the damping member (300) is viewed on the front side thereof, the damping member (300) comprises seating portions (310) concaved inward from the inner peripheral surfaces of both sides (300a and 300b) thereof with respect to the vertical center shaft (C1) in such a manner as to correspond to shapes of the first and second thickness increment portions (220a and 220b).

10. The damping bushing according to claim 1, wherein the inner case (200) comprises a seating groove (210) formed on the inner peripheral surface thereof in the circumferential direction thereof in such a manner as to fittingly couple an outer race (410) of the bearing (400) thereto, so that front and rear surfaces of the bearing (400) do not protrude outward to prevent the bearing (400) from being damaged and broken.

11. The damping bushing according to claim 1, wherein the outer case (100) and the inner case (200) are made of a hard thermoplastic material, and the damping member (300) is made of a soft thermoplastic material.

12. The damping bushing according to claim 11, wherein the outer case (100) and the inner case (200) are made of poly butylene terephthalate (PBT) or polyamide (PA), and the damping member (300) is made of thermoplastic polyester elastomer (TPEE) or thermoplastic poly urethane (TPU).

13. The damping bushing according to claim 12, wherein the materials of the outer case (100), the inner case (200), and the damping member (300) are predetermined with the following Case 1 and Case 2.
Case 1: poly butylene terephthalate (PBT) + thermoplastic polyester elastomer (TPEE), and
Case 2: polyamide (PA) + thermoplastic poly urethane (TPU).
